# DEMANDE DE BREVET EUROPEEN

(11) **EP 1 659 300 A1**
(43) Date de publication de la demande: **24.05.2006**
(21) Numéro de dépôt: 05300945.2
(22) Date de dépôt: 18.11.2005
(51) Int. Cl.: F16B 21/18, F16H 57/02, F16C 35/077

(54) **Dispositif et procédé d'assemblage de deux arbres coaxiaux à rotation indépendante**

(30) Priorité: 19.11.2004 FR 0452699
(71) Demandeur: Renault s.a.s., 92100 Boulogne Billancourt (FR)
(72) Inventeur: Cloud, Philippe, 92500, RUEIL MALMAISON (FR)

(57) **Abrégé**

Dispositif d'assemblage de deux arbres coaxiaux (1,2) libres en rotation l'un par rapport à l'autre, comportant des moyens de roulement (3) et des moyens d'immobilisation axiale du premier arbre par rapport au second, caractérisé en ce que les moyens d'immobilisation axiale comprennent un anneau d'arrêt déformable (6), maintenu entre les deux arbres à la fois dans un logement annulaire extérieur (4) de l'arbre intérieur (1), et à la fois dans un logement intérieur (9) de l'arbre extérieur (2), dont deux branches d'extrémité radiales (6a,6b) font saillie vers l'extérieur au travers d'une encoche (5a) du logement intérieur (9).

## Description

La présente invention concerne un dispositif et un procédé d'assemblage d'arbres coaxiaux à rotation indépendante.

Elle concerne plus particulièrement l'assemblage et l'immobilisation axiale de deux arbres concentriques, libres en rotation l'un par rapport à l'autre, utilisés par exemple dans les boîtes de vitesse à double embrayage d'entrée et à arbre primaires concentriques.

La publication de US2004\0200300 décrit un système d'assemblage de deux arbres coaxiaux afin d'autoriser leur rotation et leur blocage axial l'un par rapport à l'autre. Selon cette solution le second arbre creux est monté sur le premier arbre plein de manière à pouvoir tourner et à être bloqué axialement, grâce à au moins deux roulements distants axialement. Les roulements et une partie de l'arbre plein sont donc positionnés à l'intérieur de l'arbre creux.

Selon cette publication l'utilisation d'au moins deux roulements est nécessaire. Il en résulte au montage des difficultés pour la fixation des bagues externes des roulements sur la paroi interne du deuxième arbre. En outre au démontage apparaissent des difficultés d'accès aux roulements se trouvant dans l'alésage du second arbre une fois ceux-ci montés, et tout le dispositif de la boite mis en place du fait de l'exiguïté de ce genre d'architecture.

Le but de la présente invention est de remédier à ces inconvénients, et donc de permettre l'assemblage\démontage de deux arbres coaxiaux de manière simple, dans un environnement particulièrement exigu, tel celui d'une boite de vitesse.

Pour ce faire, les moyens d'immobilisation axiale comprennent un anneau d'arrêt déformable, maintenu entre les deux arbres à la fois dans un logement annulaire extérieur de l'arbre intérieur, et à la fois dans un logement intérieur de l'arbre extérieur, dont deux branches d'extrémité radiales font saillie vers l'extérieur au travers d'une encoche du logement intérieur.

Avantageusement le logement annulaire extérieur de l'arbre intérieur est situé autour des moyens de roulement.

Selon une caractéristique avantageuse de l'invention, les moyens de roulement comprennent une bague intérieure serrée sur le premier arbre.

Pour améliorer le blocage axial des deux arbres le logement annulaire autour des moyens de roulement est une gorge réalisée dans une bague extérieure dudit moyen de roulement.

De préférence l'ouverture d'entrée du second arbre est un évidement de diamètre suffisant pour permettre un montage glissant avec faible jeu de la bague extérieure dudit moyen de roulement.

Toujours par nécessité d'optimisation du blocage axial des deux arbres, le maintien de l'anneau d'arrêt par rapport à l'arbre extérieur est réalisé par un épaulement latéral délimitant un passage de sorte que ledit passage soit en vis-à-vis de la gorge de la bague extérieure, et de profondeur suffisante pour recevoir une portion de l'anneau d'arrêt.

Par souci d'équilibre en rotation et pour éviter les balourds le nombre d'encoches sera au moins de deux.

L'invention se rapporte aussi à l'ensemble de deux arbres assemblés par un dispositif conforme à l'invention.

L'invention concerne enfin un procédé d'assemblage de deux arbres coaxiaux, l'un intérieur l'autre extérieur, libre en rotation l'un par rapport à l'autre, pour lequel des moyens de roulement du premier arbre par rapport au second ont été fixés avant l'assemblage, sur le premier arbre, caractérisé en ce que :
i. dans une première étape, on maintient par pression à l'aide d'un outil adéquat un anneau d'arrêt dans une gorge d'une bague externe des moyens de roulement.
ii. dans une deuxième étape, on fait glisser l'ensemble premier arbre\moyens de roulement\anneau d'arrêt dans une ouverture prévue à cet effet dans l'arbre extérieur.
iii. dans une troisième étape, on relâche la pression exercée sur l'anneau d'arrêt de façon à piéger ses deux branches d'extrémités radiale dans une encoche, de sorte que les branches d'extrémité radiale fassent saillie vers l'extérieur de l'encoche, et de façon à ce que cet anneau d'arrêt soit maintenu à la fois dans un logement intérieur de l'arbre extérieur et à la fois dans la gorge de la bague externe des moyens de roulement.

D'autres avantages et caractéristiques de l'invention apparaîtront mieux à la lecture de la description détaillée d'un exemple non limitatif de réalisation de la présente invention, faite en référence aux figures suivantes qui représentent :
- figure 1 : une vue en perspective de deux arbres assemblés par un dispositif selon l'invention.
- figure2 : une coupe A-A longitudinale de la figure 1 selon le plan contenant l'axe de l'arbre 1 et passant entre les deux extrémités radiales 6a et 6b de l'anneau d'arrêt 6.

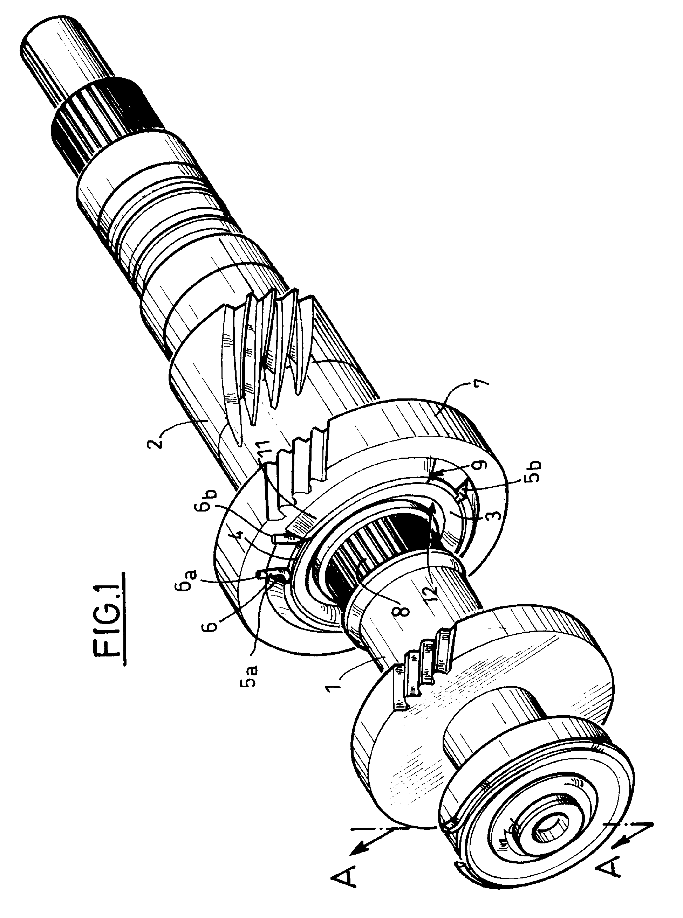

Sur la figure 1 les deux arbres 1 et 2 sont assemblés conformément à l'invention, et on distingue en partie les moyens d'assemblage proposés.

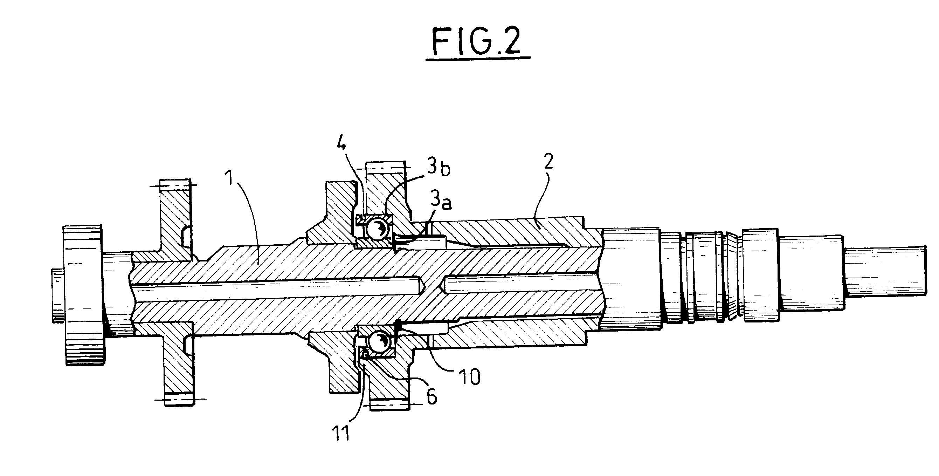

Le dispositif selon l'invention comprend un roulement 3 de l'arbre 2 autour de l'arbre 1. Ce roulement possède 2 bagues : une bague interne 3a et un bague externe 3b visibles sur la figure 2. Dans la bague externe 3b est réalisé une gorge 4. Le dispositif comprend également un anneau d'arrêt 6, d'extrémités 6a et 6b, à même de se loger dans la gorge 4 de la bague externe 3b. Dans un pignon 7 de l'arbre 2 sont réalisés : une ouverture 12 à même de recevoir avec un faible jeu la bague extérieure 3b du roulement 3 et un épaulement radial 11 délimitant un passage 9 capable de retenir partiellement l'anneau d'arrêt 6. Trois encoches dont seules deux 5a et 5b sont représentées sur la figure 1, sont réalisés dans l'épaulement radial 11.

Pour réaliser l'assemblage des deux arbres 1 et 2 grâce à un dispositif selon l'invention, la bague intérieure 3a du roulement 3 doit être préalablement montée serrée sur l'arbre intérieur 1, arrêtée axialement grâce à un anneau d'arrêt 10 visible sur la figure 2 et immobilisée en rotation par des cannelures 8. Il faut ensuite fermer momentanément l'anneau d'arrêt 6 en rapprochant ses deux extrémités radiales 6a et 6b, de manière à ce qu'il s'insère complètement dans la gorge 4 de la bague extérieur 3b du roulement 3. On engage ensuite l'arbre 2 autour de la bague extérieure 3b du roulement 3 tout en maintenant l'anneau d'arrêt dans la gorge 4 de la bague extérieure 3b du roulement 3 et en introduisant les extrémités radiales 6a et 6b dans l'encoche 5a. Une fois l'anneau d'arrêt 6 arrivé à la hauteur du passage 9 aménagé sur le flanc du pignon 7, on relâche l'action exercée sur l'anneau d'arrêt 6, ce qui provoque son expansion dans le passage 9. L'anneau d'arrêt 6 reste partiellement engagé dans la gorge 4 de la bague externe 3b du roulement 3 tout en s'ouvrant au maximum de ce que lui permet le passage 9. L'anneau d'arrêt 6 est maintenu à la fois dans la gorge de la bague externe 3b du roulement 3 et dans le passage 9. Le blocage axial de l'arbre 2 par rapport à l'arbre 1 est ainsi obtenu. Les deux arbres sont solidaires axialement tout en étant libre en rotation l'un par rapport à l'autre.

Pour le démontage de l'ensemble, il suffit d'agir sur les extrémités radiales de l'anneau d'arrêt 6 en les rapprochant de manière à ce que l'anneau d'arrêt 6 s'insère de nouveau dans la gorge 4 de la bague externe 3b du roulement 3 et libère le passage 9. Les deux arbre 1 et 2 seront ainsi désolidarisés et on pourra les séparer.

Un avantage de ce dispositif est l'accès radial particulièrement aisé à l'anneau d'arrêt 6 pour la désolidarisation des deux arbres.

Un autre avantage de cette solution est d'autoriser des vitesses de rotation élevées, sans risquer de voir l'anneau d'arrêt s'ouvrir sous l'effet de la force centrifuge.

De plus ce système permet d'obtenir un montage entièrement solidaire des deux arbres ce qui facilite la manipulation et le déplacement de l'ensemble.

Comme mentionné précédemment ce montage est particulièrement adapté pour les boites de vitesse à double embrayage. En effet dans ce type de d'architecture il faut faire tourner de manière indépendante deux arbres primaires coaxiaux l'un par rapport.

Bien entendu, il va de soi que de nombreuses modifications ou améliorations peuvent être apportées à l'invention sans pour autant sortir du cadre de celle ci.

## Revendications

1. Dispositif d'assemblage de deux arbres coaxiaux (1,2) libres en rotation l'un par rapport à l'autre, comportant des moyens de roulement (3) et des moyens d'immobilisation axiale du premier arbre par rapport au second, **caractérisé en ce que** les moyens d'immobilisation axiale comprennent un anneau d'arrêt déformable (6), maintenu entre les deux arbres à la fois dans un logement annulaire extérieur (4) de l'arbre intérieur (1), et à la fois dans un logement intérieur (9) de l'arbre extérieur (2), dont deux branches d'extrémité radiales (6a,6b) font saillie vers l'extérieur au travers d'une encoche (5a) du logement intérieur (9).

2. Dispositif d'assemblage selon la revendication 1 **caractérisé en ce que** le logement annulaire extérieur (4) de l'arbre intérieur (1) est situé autour des moyens de roulement (3).

3. Dispositif d'assemblage selon la revendication 2 **caractérisé en ce que** les moyens de roulement (3) comprennent une bague intérieure (3a) serrée sur le premier arbre.

4. Dispositif d'assemblage selon la revendication 3, **caractérisé en ce que** le logement annulaire extérieur (4) est une gorge réalisée dans une bague extérieure (3b) dudit moyen de roulement (3).

5. Dispositif d'assemblage selon la revendication 4, **caractérisé en ce que** l'ouverture d'entrée (12) de l'arbre extérieur (2) est de diamètre suffisant pour permettre un montage glissant avec faible jeu la bague extérieure (3b) du moyen roulement (3).

6. Dispositif d'assemblage selon la revendication 5, **caractérisé en ce que** le maintien de l'anneau d'arrêt (6) par rapport à l'arbre extérieur (2) est réalisé par un épaulement latéral (11) délimitant le logement intérieur (9).

7. Dispositif d'assemblage selon la revendication 6 **caractérisé en ce que** l'épaulement (11) est réalisé de manière à ce que le logement intérieur (9) soit en vis-à-vis de la gorge (4) de la bague extérieure (3b) et de profondeur suffisante pour recevoir une portion de l'anneau d'arrêt (6).

8. Dispositif d'assemblage selon la revendication 7 **caractérisé en ce que** les encoches (5a, 5b) sont au moins au nombre de deux.

9. Dispositif d'assemblage selon la revendication 8 **caractérisé en ce que** les encoches (5a, 5b) sont découpées dans l'épaulement latéral (11).

10. Ensemble de deux arbres coaxiaux libres en rotation l'un par rapport à l'autre **caractérisé en ce qu'**ils sont assemblés par un dispositif selon l'une quelconque des revendications 1 à 9.

11. Procédé d'assemblage de deux arbres coaxiaux, l'un intérieur (1) l'autre extérieur (2), libre en rotation l'un par rapport à l'autre, pour lequel des moyens de roulement (3) du premier arbre par rapport au second ont été fixés avant l'assemblage, sur le premier arbre, **caractérisé en ce que** :
i. dans une première étape, on maintient par pression à l'aide d'un outil adéquat un anneau d'arrêt (6) dans une gorge (4) d'une bague externe (3a) des moyens de roulement (3).
ii. dans une deuxième étape, on fait glisser l'ensemble premier arbre\moyens de roulement\anneau d'arrêt dans une ouverture (12) prévue à cet effet dans l'arbre extérieur (2).
iii. dans une troisième étape, on relâche la pression exercée sur l'anneau d'arrêt (6) de façon à piéger ses deux branches d'extrémités radiale (6a,6b) dans une encoches (5a), de sorte que les branches d'extrémité radiale (6a,6b) fassent saillie vers l'extérieur de l' encoche (5a), et de façon à ce que cet anneau d'arrêt (6) soit maintenu à la fois dans un logement intérieur (9) de l'arbre extérieur (2) et à la fois dans la gorge de la bague externe des moyens de roulement (3).
